# EUROPEAN PATENT APPLICATION

(11) **EP 4 306 377 A1**
(43) Date of publication of application: **17.01.2024**
(21) Application number: 23171483.3
(22) Date of filing: 04.05.2023
(51) Int. Cl.: B60W 30/14, B60W 30/182, B60W 50/08, B60W 30/18

(54) **VEHICLE CONTROL METHOD AND VEHICLE**

(30) Priority: 14.07.2022 CN 202210833191
(71) Applicant: Gogoro Inc., Wanchai, Hong Kong (CN)
(72) Inventor: LI, Kai-Chiang, 333 Taoyuan City (TW); YANG, Ching-Tan, 333 Taoyuan City (TW); HUNG, Ying-Chih, 333 Taoyuan City (TW); LIU, Tzu-Yu, 333 Taoyuan City (TW)
(74) Representative: Viering, Jentschura & Partner mbB Patent- und Rechtsanwälte

(57) **Abstract**

A vehicle control method has: determining whether a driving torque strength corresponding to a driving signal received by a vehicle is greater than a cruising torque strength corresponding to a cruise control mode when the vehicle is in the cruise control mode; and switching the vehicle into an overtake mode when the driving torque strength is greater than the cruising torque strength, in which the vehicle is given priority to drive in the overtake mode.

## Description

### BACKGROUND

### Technical Field

The present disclosure relates to a vehicle control method, a vehicle and a non-transitory computer readable storage medium.

### Description of Related Art

Driving safety requires a high degree of concentration and adaptability to achieve. People often drive dangerously due to distraction and fatigue, endangering the safety of themselves and others, and causing loss of life and property. Therefore, in recent years, the development of vehicles has gradually moved towards the direction of electronization and safety, and attempts to develop various electronic mechanisms to assist drivers in driving.

Cruise control is currently the most representative driving assistance mechanism commonly used in high-speed driving environments. The cruise control can reduce the driver's action of operating the accelerator when the vehicle is driving at high speed, and the vehicle cruises at the speed set by the driver. However, actual traffic conditions are usually complicated. When the driver needs to regain control of the driving vehicle in order to eliminate obstacles in special road conditions (such as a traffic jam in a lane), in the existing cruise control mode, the driver must first release the cruise control mode before he can control the vehicle by himself. When the driver wants the vehicle to enter the cruise control mode again after removing the aforementioned obstacles, the driver must activate the cruise control mode again. If this process is repeated many times, it will be cumbersome and inconvenient for the driver.

Accordingly, how to provide a vehicle control method to solve the aforementioned problems becomes an important issue to be solved by those in the industry.

### SUMMARY

An aspect of the disclosure is to provide a vehicle control method and a vehicle that can efficiently solve the aforementioned problems.

According to an embodiment of the disclosure, a vehicle control method includes: determining whether a driving torque strength corresponding to a driving signal received by a vehicle is greater than a cruising torque strength corresponding to a cruise control mode when the vehicle is in the cruise control mode; and switching the vehicle into an overtake mode when the driving torque strength is greater than the cruising torque strength, in which the vehicle is given priority to drive in the overtake mode.

In an embodiment of the disclosure, the vehicle control method further includes: keeping the vehicle in the cruise control mode when the driving torque strength is equal to or smaller than the cruising torque strength.

In an embodiment of the disclosure, the vehicle control method further includes: releasing the vehicle from the overtake mode and switching to the cruise control mode when the driving torque strength is adjusted from being greater than the cruising torque strength to being equal to or smaller than the cruising torque strength.

In an embodiment of the disclosure, the vehicle includes an accelerator device. The driving signal is generated by the accelerator device.

In an embodiment of the disclosure, the accelerator device includes a rotating handle. The driving signal includes an angle signal related to the rotating handle rotating relative to an initial orientation.

In an embodiment of the disclosure, the accelerator device includes an accelerator pedal. The driving signal includes a displacement amount of the accelerator pedal moving from an initial position to a first position.

According to an embodiment of the disclosure, a vehicle includes a body and a processor. The processor is disposed on the body and configured to: determine whether a driving torque strength corresponding to a driving signal received by the processor is greater than a cruising torque strength corresponding to a cruise control mode when the vehicle is in the cruise control mode; and switch the vehicle into an overtake mode when the driving torque strength is greater than the cruising torque strength, in which the vehicle is given priority to drive in the overtake mode.

In an embodiment of the disclosure, the processor is further configured to: keep the vehicle in the cruise control mode when the driving torque strength is equal to or smaller than the cruising torque strength.

In an embodiment of the disclosure, the processor is further configured to: release the vehicle from the overtake mode and switch to the cruise control mode when the driving torque strength is adjusted from being greater than the cruising torque strength to being equal to or smaller than the cruising torque strength.

In an embodiment of the disclosure, the vehicle further includes an accelerator device disposed on the body. The driving signal is generated by the accelerator device.

In an embodiment of the disclosure, the accelerator device includes a rotating handle. The driving signal includes an angle signal related to the rotating handle rotating relative to an initial orientation.

In an embodiment of the disclosure, the accelerator device includes an accelerator pedal. The driving signal includes a displacement amount of the accelerator pedal moving from an initial position to a first position.

Accordingly, in the vehicle control method and the vehicle of the present disclosure, when the vehicle is in the cruise control mode and when the driving torque strength corresponding to the driving signal received by the vehicle is greater than the cruising torque strength corresponding to the cruise control mode, the vehicle can be further switched to the overtake mode, and the vehicle is given priority to drive in the overtake mode. Moreover, when the driving torque strength is adjusted from being greater than the cruising torque strength to being equal to or smaller than the cruising torque strength, the vehicle can release the overtake mode and return to the cruise control mode. In this way, the driver can make the vehicle quickly enter the overtake mode from the cruise control mode to eliminate obstacles in special road conditions (such as a traffic jam in a lane), and let the vehicle automatically drive in the cruise control mode after the obstacles are avoided. Therefore, a process for the driver to switch a driving mode of the vehicle can be simplified, thereby improving driving experience of the driver.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a flow chart of a vehicle control method according to an embodiment of the present disclosure; and
Fig. 2 is a schematic diagram of a vehicle according to an embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

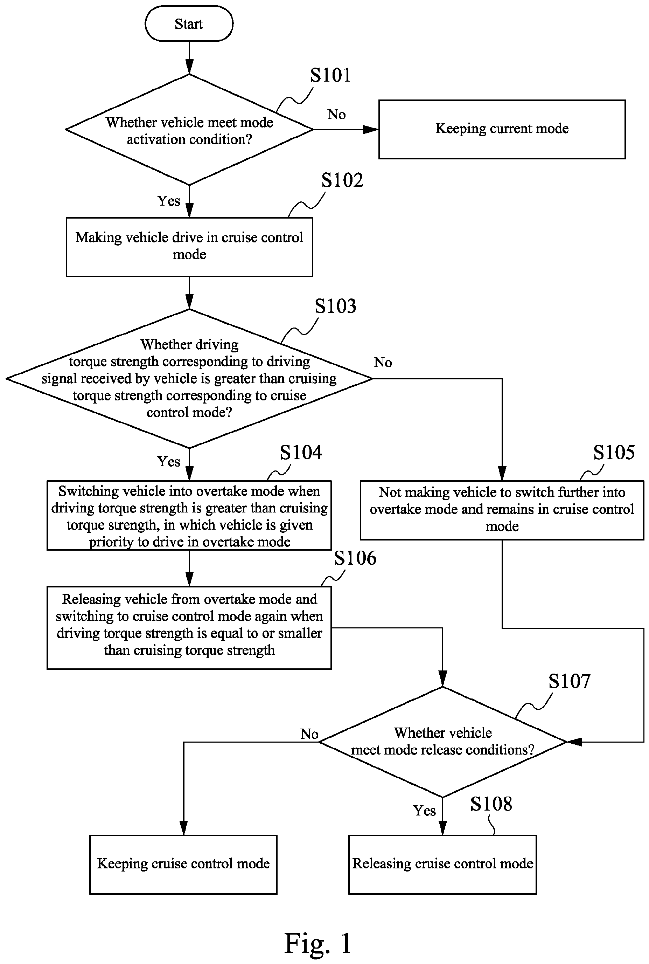

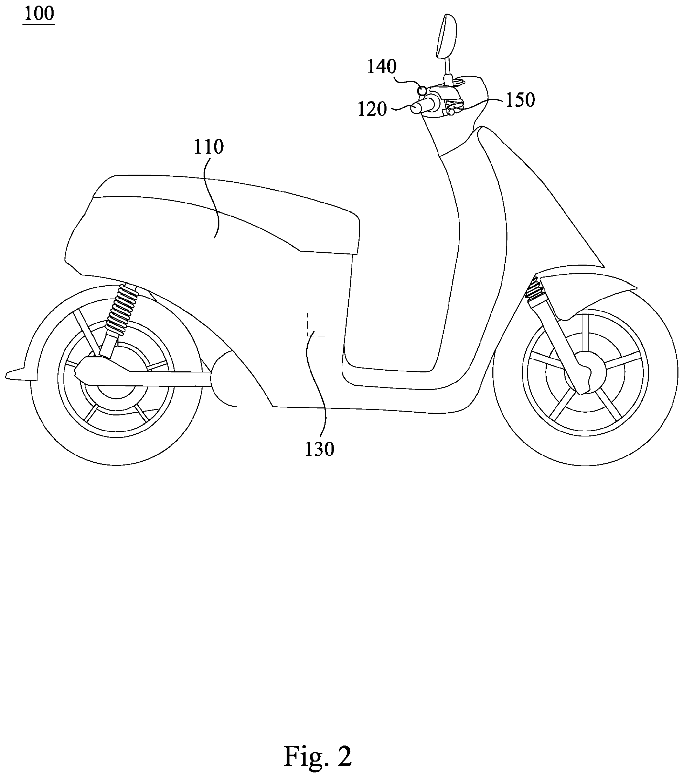

Reference is made to Figs. 1 and 2. Fig. 1 is a flow chart of a vehicle control method according to an embodiment of the present disclosure. Fig. 2 is a schematic diagram of a vehicle 100 according to an embodiment of the present disclosure. As shown in Figs. 1 and 2, in the present embodiment, the vehicle control method includes steps S101, S102 and can be executed on the vehicle 100.

Step S101: determining whether the vehicle 100 meets a mode activation condition when the vehicle 100 is not driving in a cruise control mode, in which the mode activation condition includes that the vehicle 100 receives a mode activation request signal. The mode activation request signal will be described in detail in the following paragraphs.

Step S102: making the vehicle 100 drive in the cruise control mode when the vehicle 100 meets the mode activation condition, and making the vehicle 100 drive at a cruise target speed corresponding to the cruise control mode. On the contrary, if the vehicle 100 does not meet the mode activation condition, the vehicle 100 keeps operating in the current mode. For example, if the vehicle 100 does not meet the mode activation condition, the vehicle 100 does not enter the cruise control mode, and accelerates and decelerates according to operating conditions of an accelerator and a brake.

In some embodiments, the vehicle 100 is a two-wheeled vehicle (such as a scooter-type vehicle or other straddle-type vehicle) or a transportation vehicle with more than two wheels, but the present disclosure is not limited in this regard. The vehicle control method can also be applied to other types of transportation vehicles.

In some embodiments, the vehicle 100 includes a body 110, a rotating handle 120, a processor 130, a function button 140, and a brake 150. The rotating handle 120, the processor 130, the function button 140, and the brake 150 are disposed on the body 110. For example, the function button 140 is a cruise control button or a combination button of cruise control and reverse, but the present disclosure is not limited in this regard. When the function button 140 is pressed during the vehicle 100 is not driving in the cruise control mode, the function button 140 generates a pressing signal and outputs it to the processor 130. The processor 130 receives the corresponding pressing signal and regards the pressing signal as the mode activation request signal. For example, the function button 140 may be implemented by a switch, and the switch is coupled to the processor 130, a power terminal, and a ground terminal. When the function button 140 is pressed, the switch connects the power terminal and the ground terminal, so that a current surge is conducted to the processor 130, and the current surge is the mode activation request signal. Then, the processor 130 enables the cruise control mode according to the mode activation request signal. Using a switch as a button to trigger a specific function is a common practice in the field of electronic circuits, and details are not described in the present disclosure.

The aforementioned steps S101 and S102 are both executed by the processor 130. In some embodiments, the processor 130 takes the speed of the vehicle 100 when the mode activation request signal is received as a set speed of the cruise control mode (i.e., the aforementioned cruise target speed), and makes the vehicle 100 drive at the set speed. For example, when the cruise target speed is set at 60 km/h and the current speed of the vehicle 100 is less than 60 km/h, the processor 130 will accelerate the vehicle 100 to reach the cruise target speed.

In some embodiments, the processor 130 is, for example, a microprocessor, a microcontroller, a programmable logic controller (PLC), a programmable gate array (PGA), an application specific integrated circuit (ASIC), or a controller capable of receiving signals from various sensors, performing logical operations, and sending signals to various components.

In some embodiments, the mode activation condition further includes that the speed of the vehicle 100 is equal to or greater than a predetermined speed. For example, the predetermined speed is about 10 km/h, but the present disclosure is not limited in this regard.

In some embodiments, the mode activation condition includes that stored power (also known as residual power) of an electrical energy storage device (not shown) of the vehicle 100 is greater than a predetermined power. In some embodiments, the vehicle 100 is an electric vehicle that uses a motor to drive a rear wheel and/or a front wheel, and electric power stored by the aforementioned electric energy storage device is a power source of the motor. For example, the predetermined power is about 12%, but the present disclosure is not limited in this regard. In this way, the vehicle control method of the present embodiment can prevent the vehicle 100 from entering the cruise control mode when the electric energy storage device is in a low power state.

In some embodiments, the aforementioned electrical energy storage device is, for example, any device that can store electricity and release the stored electricity, including but not limited to a battery pack or an ultracapacitor. The battery pack is, for example, one or more chemical storage cells, such as rechargeable or auxiliary battery cells (including, but not limited to, nickel-cadmium or lithium-ion battery cells).

In some embodiments, the mode activation condition includes that a temperature of the electrical energy storage device is less than a predetermined temperature. For example, the predetermined temperature is about 63 degrees Celsius, but the present disclosure is not limited in this regard. In this way, the vehicle control method of the present embodiment can prevent the temperature of the electrical energy storage device from further increasing due to operating in the cruise control mode when the electrical energy storage device is at a high temperature, thereby preventing the electric energy storage device and/or the vehicle 100 from being damaged.

In some embodiments, the mode activation condition includes that the brake 150 of the vehicle 100 is not operated (i.e., the brake 150 is in an idle state). In this way, the vehicle control method of the present embodiment can effectively avoid an accidental touch by a driver. The accidental touch is, for example, that the driver actually wants to operate the brake 150 to decelerate the vehicle 100, but accidentally presses the aforementioned function button 140.

In some embodiments, the mode activation condition includes that the speed of the vehicle 100 is within a predetermined speed range. For example, the predetermined speed range is from about 10 km/h to about 60 km/h, but the present disclosure is not limited in this regard. In other words, when the speed of the vehicle 100 is less than 10 km/h or greater than 60 km/h, the vehicle 100 will not enter the cruise control mode. In this way, the vehicle control method of the present embodiment can prevent the vehicle 100 from driving at a speed other than the safe predetermined speed range which may cause safety hazards to the driver.

In some embodiments, the mode activation condition further includes that no load shedding occurs to a power system (e.g., the motor) of the vehicle 100. That is, the motor keeps outputting power stably. Specifically, a temperature sensor (not shown) is disposed beside or inside the motor. The temperature sensor senses temperature of the motor at any time, and outputs the sensed data to the processor 130. When the temperature of the motor is greater than a predetermined motor temperature (e.g., 100 degrees Celsius), the processor 130 adjusts torque outputted to the motor to dynamically limit the driving torque, rotational speed, and output power of the motor, which is called load shedding. In other words, as long as the temperature of the motor remains at or below the predetermined motor temperature, no load shedding will occur to the motor.

As a side note, the temperature of the motor will start to drop after the load shedding occurs. The processor 130 will not release the load shedding until the temperature of the motor drops to be equal to or less than a safe motor temperature (the safe motor temperature is less than the predetermined motor temperature, e.g., 90 degrees Celsius). After the load shedding is released, the driving torque, rotational speed, and output power of the motor can be further increased to increase the current speed of the vehicle 100. Furthermore, the output power of the motor is proportional to the driving torque and the rotational speed.

In some embodiments, the vehicle 100 must meet a plurality of mode activation conditions to enter the cruise control mode. For example, when the processor 130 receives the mode activation request signal and the speed of the vehicle 100 is equal to or greater than the predetermined speed, the vehicle 100 switches to the cruise control mode. Alternatively, the vehicle 100 switches to the cruise control mode only when the processor 130 receives the mode activation request signal, the current speed of the vehicle 100 is equal to or greater than the predetermined speed, and the stored power of the electric energy storage device of the vehicle 100 is greater than the predetermined power. In some embodiments, the vehicle 100 must meet all the above-mentioned mode activation conditions before entering the cruise control mode.

In addition, the cruise target speed of the cruise control mode (the cruise target speed is equal to or greater than the predetermined speed) may be input to the processor 130 in advance. When the processor 130 receives the mode activation request signal, the processor 130 drives the motor to increase/decrease the speed of the vehicle 100 to the cruise target speed, and then switches the vehicle 100 to the cruise control mode. In some embodiments, the vehicle 100 switches to the cruise control mode only when the processor 130 receives the mode activation request signal and the vehicle 100 meets at least one of the aforementioned mode activation conditions (e.g., the stored power of the electrical energy storage device is greater than the predetermined power).

As shown in Fig. 1, in the present embodiment, the vehicle control method further includes steps S103, S104, S105, S106 and can be executed on the vehicle 100, in which steps S104, S105 are subsequent to step S103, and step S106 is subsequent to step S104.

Step S103: determining whether a driving torque strength corresponding to a driving signal received by the vehicle 100 is greater than a cruising torque strength corresponding to a cruise control mode by the processor 130. The so-called torque strength refers to the output torque of the motor. The aforementioned cruise target speed is directly affected by the cruise torque strength. For example, if the vehicle 100 intends to drive at the cruise target speed of 60 km/h, the processor 130 will dynamically adjust the cruising torque strength so that the speed of the vehicle 100 can reach 60 km/h. In addition, the driving signal will be described in detail in the following paragraphs.

Step S104: switching the vehicle 100 into an overtake mode by the processor 130 when the driving torque strength is greater than the cruising torque strength, in which the vehicle 100 is given priority to drive in the overtake mode. For example, if the current cruising torque strength corresponding to the cruise control mode is 30% of a maximum driving torque, and when the driving torque strength corresponding to the driving signal received by the processor 130 is 40% of the maximum driving torque, the processor 130 controls the vehicle 100 to further enter the overtake mode and preferentially drives in the overtake mode. Furthermore, when the vehicle 100 is driving on flat ground, the cruising torque strength enables the vehicle 100 to drive at a speed of about 50 km/h, and the driving torque strength enables the vehicle 100 to drive at a speed of about 70 km/h. In other words, the speed of the vehicle 100 is accelerated from about 50 km/h to about 70 km/h for overtaking.

Step S105: not switching the vehicle 100 to the overtake mode and keeping in the cruise control mode by the processor 130 when the driving torque strength is equal to or smaller than the cruising torque strength. For example, if the current cruising torque strength corresponding to the cruise control mode is 30% of the maximum driving torque, and when the driving torque strength corresponding to the driving signal received by the processor 130 is 20% of the maximum driving torque, the processor 130 controls the vehicle 100 not to enter the overtake mode and keeps the cruise control mode. In other words, the speed of the vehicle 100 is kept at about 50 km/h.

Step S106: releasing the vehicle 100 from the overtake mode and switching to the cruise control mode again by the processor 130 when the driving torque strength is adjusted from being greater than the cruising torque strength to being equal to or smaller than the cruising torque strength. For example, if the current cruising torque strength corresponding to the cruise control mode is 30% of the maximum driving torque, and when the driving torque strength corresponding to the driving signal received by the processor 130 is adjusted from 40% to 0% of the maximum driving torque, the processor 130 controls the vehicle 100 to release the overtake mode and enables the vehicle 100 to enter the cruise control mode. In other words, the speed of the vehicle 100 is decelerated to about 50 km/h from the speed originally driven by the driving torque strength (e.g., about 70 km/h).

In this way, the driver can make the vehicle 100 quickly enter the overtake mode from the cruise control mode to eliminate obstacles in special road conditions (such as a traffic jam in a lane), and let the vehicle 100 automatically drive in the cruise control mode after the obstacles are avoided. Therefore, a process for the driver to switch a driving mode of the vehicle 100 can be simplified, thereby improving driving experience of the driver.

In some embodiments, the vehicle 100 further includes an accelerator device. The driving signal is generated by the accelerator device. Specifically, in some embodiments, the accelerator device at least includes the rotating handle 120 shown in Fig. 2. The driving signal includes an angle signal related to the rotating handle 120 rotating relative to an initial orientation. That is to say, the angle signal represents a rotation amount of the rotating handle 120. For example, the rotating handle 120 is configured to rotate 0 to 90 degrees forward (or counterclockwise) from the initial orientation. When the rotation angle relative to the initial orientation is 0 degree, the driving torque strength corresponding to the driving signal is 0% of the maximum driving torque; and when the rotation angle relative to the initial orientation is 90 degrees, the driving torque strength corresponding to the driving signal is 90% of the maximum driving torque. In practical applications, a relationship between the rotation angle of the rotating handle 120 relative to the initial orientation and the driving torque strength corresponding to the driving signal may be linear or non-linear.

For example, the rotating handle 120 can generate a driving signal with 0-3.3V according to a state of being rotated. When the driver slightly turns the accelerator (for example, the rotation angle relative to the initial orientation is 10 degrees), the accelerator generates a 0.7V driving signal and outputs it to the processor 130. After detecting the driving signal of 0.7V, the processor 130 drives the motor to run at 20% of the maximum driving torque. When the driver turns the accelerator greatly (for example, the rotation angle is 90 degrees relative to the initial orientation), the accelerator generates a driving signal exceeding 3V and outputs it to the processor 130. After detecting the driving signal exceeding 3V, the processor 130 drives the motor to run at 90% of the maximum driving torque.

In some other embodiments, the vehicle 100 includes with two or more wheels, the accelerator device of the vehicle 100 includes an accelerator pedal, and the driving signal includes a moving signal related to the accelerator pedal being stepped on relative to an initial position. For example, the moving signal represents a displacement amount of the accelerator pedal from the initial position to a first position. The accelerator pedal is configured to be stepped 0 to 10 cm from the initial position. When the displacement amount of the accelerator pedal is 0 cm relative to the initial position, the driving torque strength corresponding to the driving signal is 0% of the maximum driving torque; and when the displacement amount of the accelerator pedal is 10 cm relative to the initial position (i.e., the accelerator pedal moves to the first position), the driving torque strength corresponding to the driving signal is 90% of the maximum driving torque. In practical applications, a relationship between the displacement amount of the accelerator pedal relative to the initial position and the driving torque strength corresponding to the driving signal may be linear or non-linear, which is also not limited by the present disclosure.

As shown in Fig. 1, in the present embodiment, the vehicle control method further includes steps S107, S108 and can be executed on the vehicle 100, in which step S107 is subsequent to steps S105 and S106, and step S108 is subsequent to step S107.

Step S107: determining whether the vehicle 100 meets a mode release condition by the processor 130 when the vehicle 100 is driving in the cruise control mode.

Step S108: releasing the cruise control mode by the processor 130 when the vehicle 100 meets the mode release condition. On the contrary, if the vehicle 100 does not meet the mode release condition, the processor 130 keeps the vehicle 100 operating in the cruise control mode.

In some embodiments, the mode release condition includes that the stored power of the electrical energy storage device of the vehicle 100 is equal to or less than the predetermined power. In some embodiments, the vehicle 100 is an electric vehicle that uses a motor to drive the rear wheel and/or the front wheel, and the electric power stored by the aforementioned electric energy storage device is the power source of the motor. For example, the predetermined power is about 12%, but the present disclosure is not limited in this regard. In this way, the vehicle control method of the present embodiment can automatically release the vehicle 100 from the cruise control mode when the electric energy storage device is in a low battery condition, so as to avoid further power consumption of the vehicle 100.

In some embodiments, the mode release condition includes that the temperature of the electrical energy storage device is equal to or greater than the predetermined temperature. For example, the predetermined temperature is about 63 degrees Celsius, but the present disclosure is not limited in this regard. In this way, the vehicle control method of the present embodiment can automatically release the vehicle 100 from the cruise control mode when the electric energy storage device is at a high temperature, so as to avoid the electric energy storage device and/or the vehicle 100 from being damaged due to further increase of the temperature of the electric energy storage device.

In some embodiments, the mode release condition includes that the speed of the vehicle is equal to or less than a safe speed. For example, the safe speed is about 5 km/h, but the present disclosure is not limited in this regard. In some embodiments, the safe speed may be set to be less than the predetermined speed. In this way, the vehicle control method of the present embodiment can automatically release the cruise control mode when the vehicle 100 cannot run at the set speed of the cruise control mode due to certain factors (for example, the vehicle 100 climbs a steep slope), so as to avoid excessive wear and tear of the power system of the vehicle 100.

In some embodiments, the processor 130 may not set the safe speed, but directly use the predetermined speed to determine whether to release the cruise control mode. For example, when the speed of the vehicle 100 is less than the predetermined speed, the processor 130 determines that the vehicle 100 meets the mode release condition, and releases the cruise control mode.

In some embodiments, the mode release condition includes that the vehicle 100 receives a mode release request signal. In some embodiments, when the function button 140 is pressed during the vehicle 100 is driving in the cruise control mode, the processor 130 can receive the corresponding pressing signal, regard the pressing signal as the mode release request signal, and then release the cruise control mode according to the mode release request signal. As mentioned above, the function button 140 can be implemented by a switch to generate and output the pressing signal.

In some embodiments, when the brake 150 of the vehicle 100 is operated during the vehicle 100 is driving in the cruise control mode (that is, the brake 150 is in a pressed state), the processor 130 can receive a corresponding operation signal, and regard the operation signal as the mode release request signal. In this way, the vehicle control method of the present embodiment allows the driver to autonomously determine the timing of releasing the cruise control mode through manual operation. In some embodiments, the processor 130 will not release the cruise control mode until the brake is operated for a certain time period (e.g., more than 3 seconds).

In some embodiments, the mode release condition further includes that the load shedding occurs to the power system of the vehicle 100 (i.e., the temperature of the motor is greater than the predetermined motor temperature). At this time, the processor 130 determines that the temperature of the motor is too high, which may affect the driving safety, and releases the cruise control mode.

In some embodiments, when only one of the aforementioned mode release conditions is satisfied, the processor 130 controls the vehicle 100 to release the cruise control mode. In some embodiments, the cruise control mode is released only when the vehicle 100 meets at least two of the aforementioned mode release conditions. Alternatively, in some embodiments, the cruise control mode is released only when the vehicle 100 meets each of the aforementioned mode release conditions.

In some embodiments, the vehicle control method of the present disclosure may be implemented through one or more microcontrollers. However, those skilled in the art will recognize that the embodiments disclosed herein, in whole or in part, can be equivalently implemented in standard integrated circuits (e.g., Application Specific Integrated Circuits or ASICs), as one or more computer programs executed by one or more computers (e.g., as one or more programs running on one or more computer systems), as one or more programs executed by on one or more controllers (e.g., microcontrollers) as one or more programs executed by one or more processors 130 (e.g., microprocessors), as firmware, or as virtually any combination thereof, and that designing the circuitry and/or writing the code for the software and/or firmware would be well within the skill of one of ordinary skill in the art in light of the teachings of this disclosure.

When logic is implemented as software/firmware and stored in memory, logic or information can be stored on any non-transitory computer readable medium for use by or in connection with any processor-related system or method. In the context of this disclosure, a memory is a non-transitory computer- readable or processor-readable storage medium that is an electronic, magnetic, optical, or other physical device or means that non-transitorily contains or stores a computer and/or processor program. Logic and/or the information can be embodied in any computer readable medium for use by or in connection with an instruction execution system, apparatus, or device, such as a computer-based system, processor-containing system, or other system that can fetch the instructions from the instruction execution system, apparatus, or device and execute the instructions associated with logic and/or information.

In some embodiments, a non-transitory computer readable storage medium having computer executable instructions thereon that, when executed by one or more computer processors 130, cause the one or more computer processors 130 to: determine whether a driving torque strength corresponding to a driving signal received by a vehicle 100 is greater than a cruising torque strength corresponding to a cruise control mode when information related to the vehicle 100 is in the cruise control mode is received; and generate a mode activation command which switches the vehicle 100 into an overtake mode when the driving torque strength is greater than the cruising torque strength, in which the vehicle 100 is given priority to drive in the overtake mode.

In some embodiments, the non-transitory computer readable storage medium further includes computer executable instructions thereon, when executed by the one or more computer processors 130, cause the one or more computer processors 130 to: not generate the mode activation command when the driving torque strength is equal to or smaller than the cruising torque strength. At this time, the vehicle 100 will not switch to the overtake mode, but will be kept in the cruise control mode.

In some embodiments, the non-transitory computer readable storage medium further includes computer executable instructions thereon, when executed by the one or more computer processors 130, cause the one or more computer processors 130 to: generate a mode release command when the driving torque strength is adjusted from being greater than the cruising torque strength to being equal to or smaller than the cruising torque strength, in which the mode release command releases the vehicle 100 from the overtake mode and switches to the cruise control mode.

In some embodiments, the non-transitory computer readable storage medium further includes computer executable instructions thereon, when executed by the one or more computer processors 130, cause the one or more computer processors 130 to: generating a control command to make the vehicle 100 in the cruise control mode release the cruise control mode. The mode release condition for releasing the cruise control mode is the same as the above, and will not be repeated here.

In some embodiments, the driving signal is an operation signal generated by operating an accelerator device of the vehicle 100. In some embodiments, the driving signal includes an angle signal related to the rotating handle 120 of the vehicle 100 rotating relative to an initial orientation. In some embodiments, the driving signal is a moving signal related to the accelerator pedal of the vehicle 100 being depressed relative to the initial position.

According to the foregoing recitations of the embodiments of the disclosure, it can be seen that in the vehicle control method, the vehicle, and the non-transitory computer readable storage medium of the present disclosure, when the vehicle is in the cruise control mode and when the driving torque strength corresponding to the driving signal received by the vehicle is greater than the cruising torque strength corresponding to the cruise control mode, the vehicle can be further switched to the overtake mode, and the vehicle is given priority to drive in the overtake mode. Moreover, when the driving torque strength is adjusted from being greater than the cruising torque strength to being equal to or smaller than the cruising torque strength, the vehicle can release the overtake mode and return to the cruise control mode. In this way, the driver can make the vehicle quickly enter the overtake mode from the cruise control mode to eliminate obstacles in special road conditions (such as a traffic jam in a lane), and let the vehicle automatically drive in the cruise control mode after the obstacles are avoided. Therefore, a process for the driver to switch a driving mode of the vehicle can be simplified, thereby improving driving experience of the driver.

## Claims

1. A vehicle control method, comprising:
determining whether a driving torque strength corresponding to a driving signal received by a vehicle (100) is greater than a cruising torque strength corresponding to a cruise control mode when the vehicle (100) is in the cruise control mode; and
switching the vehicle (100) into an overtake mode when the driving torque strength is greater than the cruising torque strength, wherein the vehicle (100) is given priority to drive in the overtake mode.

2. The vehicle control method of claim 1, further comprising:
keeping the vehicle (100) in the cruise control mode when the driving torque strength is equal to or smaller than the cruising torque strength.

3. The vehicle control method of claim 1 or 2, further comprising:
releasing the vehicle (100) from the overtake mode and switching to the cruise control mode when the driving torque strength is adjusted from being greater than the cruising torque strength to being equal to or smaller than the cruising torque strength.

4. The vehicle control method of any preceding claims, wherein the vehicle (100) comprises an accelerator device, and the driving signal is generated by the accelerator device.

5. The vehicle control method of claim 4, wherein the accelerator device comprises a rotating handle (120), and the driving signal comprises an angle signal related to the rotating handle (120) rotating relative to an initial orientation.

6. The vehicle control method of claim 4, wherein the accelerator device comprises an accelerator pedal, and the driving signal comprises a displacement amount of the accelerator pedal moving from an initial position to a first position.

7. A vehicle (100), comprising:
a body (110); and
a processor (130) disposed on the body (110) and configured to:
determine whether a driving torque strength corresponding to a driving signal received by the processor (130) is greater than a cruising torque strength corresponding to a cruise control mode when the vehicle (100) is in the cruise control mode; and
switch the vehicle (100) into an overtake mode when the driving torque strength is greater than the cruising torque strength, wherein the vehicle (100) is given priority to drive in the overtake mode.

8. The vehicle (100) of claim 7, wherein the processor (130) is further configured to:
keep the vehicle (100) in the cruise control mode when the driving torque strength is equal to or smaller than the cruising torque strength.

9. The vehicle (100) of claim 7 or 8, wherein the processor (130) is further configured to:
release the vehicle (100) from the overtake mode and switch to the cruise control mode when the driving torque strength is adjusted from being greater than the cruising torque strength to being equal to or smaller than the cruising torque strength.

10. The vehicle (100) of any preceding claims, further comprising an accelerator device disposed on the body (110), the driving signal being generated by the accelerator device.

11. The vehicle (100) of claim 10, wherein the accelerator device comprises a rotating handle (120), and the driving signal comprises an angle signal related to the rotating handle (120) rotating relative to an initial orientation.

12. The vehicle (100) of claim 10, wherein the accelerator device comprises an accelerator pedal, and the driving signal comprises a displacement amount of the accelerator pedal moving from an initial position to a first position.
